Europäisches Patentamt

European Patent Office

Office européen des brevets

(19)

(11) Numéro de publication : **0 317 432 B1**

## (12) FASCICULE DE BREVET EUROPEEN

(45) Date de publication du fascicule du brevet :
08.01.92 Bulletin 92/02

(51) Int. Cl.⁵ : **F01D 5/20**

(21) Numéro de dépôt : **88402882.0**

(22) Date de dépôt : **17.11.88**

(54) **Aube de compresseur à léchettes d'extrémité dissymétriques.**

(30) Priorité : **19.11.87 FR 8715981**

(43) Date de publication de la demande :
**24.05.89 Bulletin 89/21**

(45) Mention de la délivrance du brevet :
**08.01.92 Bulletin 92/02**

(84) Etats contractants désignés :
**DE FR GB IT SE**

(56) Documents cités :
**CH-A- 374 085**
**CH-A- 475 471**
**DE-A- 1 937 395**
**GB-A- 193 777**
**GB-A- 2 075 129**

(56) Documents cités :
**SOVIET INVENTIONS ILLUSTRATED, section P/Q, semaine D32, 16 septembre 1981, page 2, no. H4166D/32, Derwent Publications Ltd, Londres, GB**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Fetiveau, Jean Yvon Louis**
**45, boulevard de la République**
**F-91450 Soisy Sur Seine (FR)**

(74) Mandataire : **Moinat, François et al**
**S.N.E.C.M.A. Service des Brevets Boîte Postale 81**
**F-91003 Evry Cédex (FR)**

## Description

La présente invention concerne les aubes de compresseur, notamment les aubes mobiles formant les étages de rotor d'un compresseur de turbomachine.

La recherche d'une amélioration des performances d'un compresseur de turbomachine, notamment de type axial, a imposé, pour accroître l'efficacité d'un étage de compression constitué d'aubes mobiles, d'améliorer l'étanchéité en extrémité des aubes mobiles et d'assurer une adaptation en fonctionnement, tenant compte des divers facteurs de dilatations d'origine mécanique et thermique et de déformations provenant des diverses contraintes qui s'exercent sur les pièces mobiles de rotor ou sur les pièces fixes du stator associé. C'est ainsi que des garnitures d'étanchéité et d'usure, constituées de revêtements dits "abradables", sont placés sur les surfaces internes de carter, en regard des extrémités d'aubes mobiles et, dans certaines applications de turbomachine, les extrémités des aubes mobiles portent des éléments profilés sous forme de dents et couramment appelés léchettes, qui sont susceptibles de coopérer avec lesdites garnitures abradables pour assurer l'étanchéité.

Par ailleurs, ont été observés, suivant les conditions de fonctionnement du rotor, certains phénomènes d'instabilité vibratoire d'aubes mobiles. Notamment, des vibrations en flottement peuvent provenir des conditions d'écoulement aérodynamique, aux conditions limites du sommet de l'aube. Dans certaines applications, aucune des solutions précédemment envisagées ne donne entière satisfaction. FR-A 2465067 prévoit un amortissement des vibrations d'une pale d'aube en ménageant une fente sur le corps de pale, côté bord de fuite, allant de l'extrémité libre vers le talon d'aube. Le but de l'invention vise plutôt à éviter l'apparition des vibrations en modifiant les conditions aérodynamiques à l'extrémité d'une aube.

Par ailleurs, GB-A-2075129 décrit une aube dont l'extrémité est munie de plusieurs léchettes qui peuvent être de hauteur différente, chaque léchette s'étendant de manière continue entre bord d'attaque et bord de fuite de l'aube.

CH-A-475471 décrit une aube à l'extrémité de laquelle sont disposées des léchettes dont chacune a une extrémité sur le côté extrados de l'aube et l'autre extrémité sur le côté intrados de l'aube.

SU-A-779591 décrit une aube mobile à l'extrémité de laquelle est ménagée une fente continue d'un côté à l'autre de l'aube.

Une aube mobile conforme à l'invention et répondant à ces conditions est caractérisée en ce que la léchette d'extrémité est discontinue entre bord d'attaque et bord de fuite de l'aube et constituée de deux parties ou demi-léchettes disposées, chacune sur un côté de l'aube, intrados ou extrados, une léchette étant présente sur un seul côté de l'aube et non sur l'autre côté au moins dans les deux zones de bord de fuite et de bord d'attaque.

La dissymétrie géométrique et structurelle ainsi obtenue induit une dissymétrie aérodynamique qui modifie les conditions limites au sommet de l'aube mobile et les fréquences sensibles de l'aube sont également modifiées, ce qui permet d'éliminer les vibrations en flottement dans les mêmes conditions d'utilisation. Cette adaptation des aubes mobiles peut avantageusement être appliquée sans autre répercussion sur la définition de l'aube.

En fonction des conditions particulières à chaque application et des résultats obtenus, plusieurs modes avantageux de réalisation peuvent être envisagés. Notamment, soit une partie de léchette intéresse l'intrados de l'aube côté bord d'attaque et l'autre partie, l'extrados de l'aube côté bord de fuite, soit ces positions respectives sont inversées, ou encore les extrémités des demi-léchettes du côté interne de l'aube peuvent ou non présenter un recouvrement en vue de face.

D'autres caractéristiques et avantages de l'invention seront mieux compris à la lecture de la description qui va suivre des modes de réalisation d'une aube mobile de compresseur conforme à l'invention et en référence aux dessins annexés sur lesquels :

— la figure 1 représente une vue de dessus de l'extrémité libre d'une aube mobile de compresseur selon un premier mode de réalisation de l'invention ;

— la figure 1a montre une vue partielle de l'aube mobile représentée à la figure 1, en coupe par un plan transversal selon la ligne I-I de la figure 1 ;

— la figure 2 représente une vue de dessus, analogue à la figure 1, de l'extrémité libre d'une aube mobile de compresseur selon un deuxième mode de réalisation de l'invention ;

— la figure 2a montre une vue partielle, analogue à la figure 1a, de l'aube mobile représentée à la figure 2, en coupe par un plan transversal selon la ligne II-II de la figure 2 ;

— la figure 3 représente une vue de dessus, analogue aux figures 1 et 2, de l'extrémité libre d'une aube mobile de compresseur, selon une variante du deuxième mode de réalisation représenté à la figure 2 ;

— la figure 4 représente une vue de dessus, analogue aux figures 1, 2 et 3, de l'extrémité libre d'une aube mobile de compresseur, selon une autre variante du deuxième mode de réalisation représenté à la figure 2 ;

— la figure 4a montre une vue partielle, analogue aux figures 1a et 2a, de l'aube mobile représentée à la figure 4, en coupe par un plan transversal selon la ligne IV-IV de la figure 4 ;

— la figure 5 montre une vue de face de l'aube mobile de compresseur représentée à la figure 1, en coupe partielle suivant la ligne V-V de la figure 1.

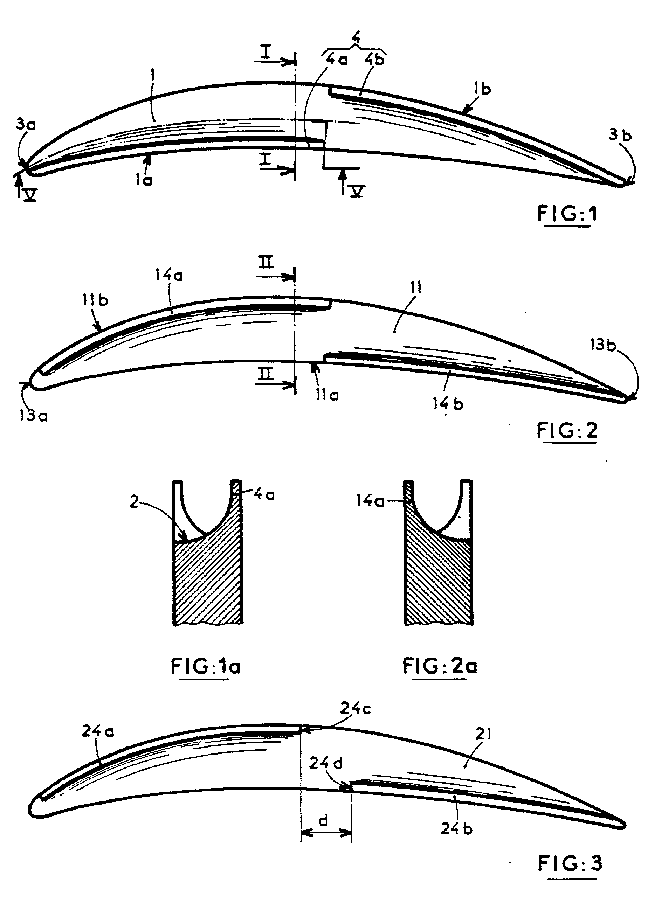

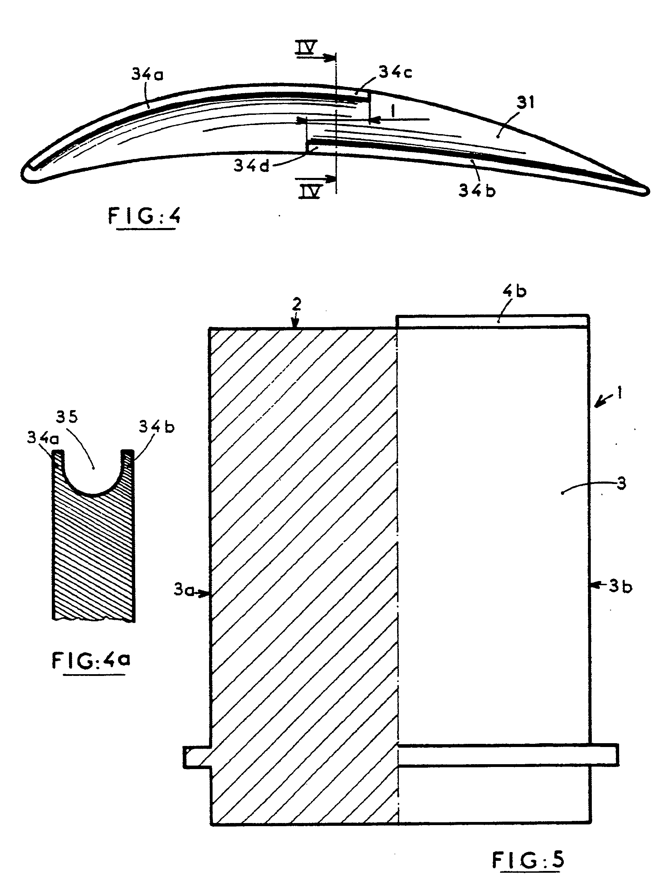

Sur les figures 1, 1a et 5, est représentée une aube 1 d'un étage mobile de compresseur d'une turbomachine, conforme à l'invention selon un premier mode de réalisation. L'extrémité libre 2 de la pale 3 de ladite aube 1 porte une léchette 4 discontinue, constituée de deux parties ou demi-léchettes 4a et 4b dont la disposition introduit une dissymétrie à ladite extrémité 2 d'aube. La première demi-léchette 4a est située sur l'intrados 1a de l'aube 1 et s'étend du bord d'attaque 3a de l'aube jusqu'au voisinage du plan médian perpendiculaire à la corde de l'aube et la deuxième léchette 4b est située sur l'extrados 1b de l'aube 1 et s'étend dudit plan médian au bord de fuite 3b de l'aube.

Selon un deuxième mode de réalisation de l'invention représenté aux figures 2 et 2a, la première demi-léchette 14a est située sur l'extrados 11b d'une aube mobile 11 et s'étend du bord d'attaque 13a de l'aube jusqu'au voisinage du plan médian perpendiculaire à la corde de l'aube et la deuxième léchette 14b est située sur l'intrados 11a de l'aube 11 et s'étend dudit plan médian au bord de fuite 13b de l'aube.

La figure 3 montre une variante du deuxième mode de réalisation représenté aux figures 2 et 2a, dans laquelle les extrémités respectives 24c et 24d des demi-léchettes 24a et 24b, situées du côté interne de l'aube 21 laissent apparaître un écart d entre les plans d'extrémité perpendiculaires respectivement au bord d'aube.

La figure 4 montre une autre variante du deuxième mode de réalisation représenté aux figures 2 et 2a, dans laquelle les extrémités respectives 34c et 34d des demi-léchettes 34a et 34b présentent une partie en recouvrement sur une longueur 1. Les conditions de débit en extrémité de l'aube 31 se trouvent ainsi modifiées par la création d'un mini-canal 35, modifiant ainsi les écoulements parasites en extrémité d'aube et les conditions limites d'écoulement.

Bien entendu les variantes des figures 3 et 4 qui ont été appliquées au deuxième mode de réalisation selon les figures 2 et 2a peuvent de manière analogue être appliquées au premier mode de réalisation selon les figures 1 et 1a.

## Revendications

1. Aube d'un étage mobile de rotor de compresseur dont l'extrémité (2) porte au moins une léchette (4) d'étanchéité caractérisée en ce que ladite léchette (4) est discontinue entre bord d'attaque et bord de fuite de l'aube et constituée de deux parties ou demi-léchettes (4a, 4b ; 14a, 14b ; 24a, 24b ; 34a, 34b), disposées, chacune sur un côté de l'aube, intrados ou extrados, une léchette étant présente sur un seul côté de l'aube et non sur l'autre côté au moins dans les deux zones de bord de fuite et de bord d'attaque.

2. Aube mobile de compresseur selon la revendication 1 caractérisée en ce qu'une première partie de léchette ou demi-léchette (4a) est placée sur le côté intrados (1a) de l'aube (1) et s'étend du bord d'attaque (3a) jusqu'au voisinage du plan médian perpendiculaire à la corde de l'aube et une deuxième partie de léchette ou demi-léchette (4b) est placée sur le côté extrados (1b) de l'aube (1) et s'étend dudit plan médian au bord de fuite (3b) de l'aube.

3. Aube mobile de compresseur selon la revendication 1 caractérisée en ce qu'une première partie de léchette ou demi-léchette (14a) est placée sur le côté extrados (11b) de l'aube et s'étend du bord d'attaque (13a) jusqu'au voisinage du plan médian perpendiculaire à la corde de l'aube et une deuxième partie de léchette ou demi-léchette (14b) est placée sur le côté intrados (11a) de l'aube et s'étend dudit plan médian au bord de fuite (13b) de l'aube.

4. Aube mobile de compresseur selon l'une quelconque des revendications 1 à 3 caractérisée en ce que les deux demi-léchettes (24a, 24b) ne présentent pas de partie respective en vis-à-vis d'un côté à l'autre de l'aube.

5. Aube mobile de compresseur selon l'une quelconque des revendications 1 à 3 caractérisée en ce que les deux demi-léchettes (34a, 34b) présentent respectivement une partie en vis-à-vis d'un côté à l'autre de l'aube, formant un recouvrement écarté sur une longueur 1.

## Patentansprüche

1. Bewegliche Schaufel für eine Verdichterrotorstufe, die an ihrem Ende (2) wenigstens eine Dichtungslippe (4) trägt, dadurch gekennzeichnet, daß diese Zunge (4) zwischen Vorderkante und Hinterkante der Schaufel diskontinuierlich ausgebildet ist und aus zwei Zungenteilen oder Halblippen (4a, 4b ; 14a, 14b ; 24a, 24b ; 34a, 34b) besteht, die jeweils auf der äußeren oder auf der inneren Wölbungsseite der Schaufel so angeordnet sind, daß eine Zunge zumindest in den beiden Zonen der Hinterkante und der Vorderkante nur auf einer Seite, nicht aber auf der anderen Seite der Schaufel vorhanden ist.

2. Bewegliche Verdichterschaufel nach Anspruch 1, dadurch gekennzeichnet, daß ein erster Zungenteil oder eine erste Halblippe (4a) an der inneren Wölbungsseite (1a) der Schaufel (1) angeordnet ist und sich von der Vorderkante (3a) bis in die Nähe der zur Schaufelsehne senkrechten Mittelebene erstreckt und daß ein zweiter Zungenteil oder eine zweite Halblippe (4b) an der äußeren Wölbungsseite der Schaufel angeordnet ist und sich von der genannten Mittelebene bis zur Hinterkante (3b) der Schaufel erstreckt.

3. Bewegliche Verdichterschaufel nach Anspruch 1, dadurch gekennzeichnet, daß ein erster Zungenteil oder eine erste Halblippe (14a) an der äußeren Wölbungsseite (11b) der Schaufel angeordnet ist und sich von der Vorderkante (13a) bis in die Nähe der zur Schaufelsehne senkrechten Mittelebene erstreckt und daß ein zweiter Zungenteil oder eine zweite Halblippe (14b) an der inneren Wölbungsseite der Schaufel angeordnet ist und sich von der genannten Mittelebene bis zur Hinterkante (13b) der Schaufel erstreckt.

4. Bewegliche Verdichterschaufel nach einem der Ansprüche 1 bis 3, dadurch gekennzeichnet, daß die beiden Halblippen (24a, 24b) keine Teile besitzen, die auf den beiden Seiten der Schaufel einander gegenüberliegen.

5. Bewegliche Verdichterschaufel nach einem der Ansprüche 1 bis 3, dadurch gekennzeichnet, daß die beiden Halblippen (34a, 34b) jeweils Teile besitzen, die auf den beiden Seiten der Schaufel einander gegenüberliegen und im Abstand voneinander über eine Länge 1 einander überlappen.

## Claims

1. Blade of a rotating stage of a compressor rotor of which the tip (2) carries at least one rubbing strip seal (4) characterised in that the said rubbing strip (4) is discontinuous between the leading edge and the trailing edge of the blade and is made up of two parts or demi-rubbing strips (4a, 4b ; 14a, 14b ; 24a ; 24b ; 34a, 34b) arranged one on each side of the blade, pressure or suction sides, one rubbing strip being present on a single side of the blade and not on the other, at least in the two zones of trailing and leading edges.

2. Rotating compressor blade in accordance with Claim 1, characterised in that a first section of rubbing strip or demi-rubbing strip (4a) is placed on the pressures side (1a) of the blade (1) and extends from the leading edge (3a) to the area of the median plane perpendicular to the chord of the blade and a second section of rubbing strip or demi-rubbing strip (4b) is placed on the suction side (1b) of the blade (1) and extends from the said median plane to the trailing edge (3b) of the blade.

3. Rotating compressor blade in accordance with Claim 1, characterised in that a first section of rubbing strip or demi-rubbing strip (14a) is placed on the suction side (11b) of the blade and extends from the leading edge (13a) to the area of the median plane perpendicular to the chord of the blade and a second section of rubbing strip or demi-rubbing strip (14b) is placed on the pressure side (11a) of the blade and extends from the said median plane to the trailing edge (13b) of the blade.

4. Rotating compressor blade in accordance with any of the Claims 1 to 3, characterised in that the two demi-rubbing strips (24a, 24b) do not have any respective part facing each other from one side or other of the blade.

5. Rotating compressor blade in accordance with any of the Claims 1 to 3, characterised in that the two demi-rubbing strips (34a, 34b) do have a respective part facing each other from one side of the blade to the other, forming an overlap of the length l.

FIG:1

FIG:2

FIG:1a

FIG:2a

FIG:3

FIG:4

FIG:4a

FIG:5